# EUROPÄISCHE PATENTSCHRIFT

(11) **EP 2 910 364 B1**
(45) Veröffentlichungstag und Bekanntmachung des Hinweises auf die Patenterteilung: **26.12.2018**
(21) Anmeldenummer: 15155692.5
(22) Anmeldetag: 19.02.2015
(51) Int. Cl.: B29C 70/04, B60H 1/00, B29C 45/14, B29K 23/00

(54) **KLIMAGERÄT, INSBESONDERE FÜR EIN KRAFTFAHRZEUG UND VERFAHREN ZUR HERSTELLUNG EINER KOMPONENTE EINES KLIMAGERÄTES**
AIR CONDITIONING DEVICE, IN PARTICULAR FOR A MOTOR VEHICLE AND METHOD FOR PRODUCING A COMPONENT OF AN AIR CONDITIONING DEVICE
APPAREIL DE CLIMATISATION, EN PARTICULIER POUR UN VÉHICULE AUTOMOBILE ET PROCÉDÉ DE FABRICATION D'UN COMPOSANT D'UN APPAREIL DE CLIMATISATION

(30) Priorität: 24.02.2014 DE 102014203235
(43) Veröffentlichungstag der Anmeldung: 26.08.2015
(73) Patentinhaber: MAHLE International GmbH, 70376 Stuttgart (DE)
(72) Erfinder: Hendrickx, Katia, 70839 Gerlingen (DE); Schnaars, Alexandra, 71672 Marbach am Neckar (DE)
(74) Vertreter: Grauel, Andreas

(56) Entgegenhaltungen:
- WO-A1-2006/091254
- WO-A2-2006/091245
- DE-A1-102008 002 408
- DE-A1-102012 203 352
- DE-U1-202012 010 569

## Beschreibung

### Technisches Gebiet

Die Erfindung betrifft ein Klimagerät nach dem Oberbegriff von Anspruch 1.

### Stand der Technik

Zur Erfüllung der stetig wachsenden Forderung nach Energieeffizienz und CO₂-Reduktion spielt die Entwicklung von Leichtbaukonzepten in der Automobilindustrie eine immer bedeutendere Rolle. Dies gilt u.a. auch für die Entwicklung neuer Klimageräte.

Es ist bekannt, dass Klimageräte mit einem Gehäuse aus Polypropylen hergestellt werden, welches anhand eines Spritzgießverfahrens hergestellt ist. Üblich ist dabei entweder der Einsatz von Schaumspritzgießverfahren mit Talkum verstärktem Polypropylen, um Material und Gewicht einzusparen oder die Anwendung von hochkristallinem Polypropylen zum Erreichen eines niedrigen Gewichts aufgrund einer niedrigen Materialdichte. Bei diesen Klimageräten ist das Potential zur Gewichtsreduzierung hinsichtlich des Kunststoffgehäuses annähernd ausgeschöpft, da bereits Polypropylen als Thermoplast mit der geringsten Dichte zum Einsatz kommt und weitere Wanddickenreduzierungen spritzgießtechnisch begrenzt sind.

Aus der FR 2 727 666 A1 ist eine Karosserie eines Kraftfahrzeuges bekannt, weiche zumindest teilweise aus einer Mischung verschiedener synthetischer Materialien besteht, wobei diese Materialmischung wiederverwertbar ist. Dabei enthält diese Mischung Polyamid-Polypropylen.

Die US 8 021 592 B2 offenbart ein Verfahren zur Herstellung eines Halbzeuges in Form einer dünnen Platte aus Polypropylen unter Berücksichtigung verschiedener Zusammensetzungen des Polypropylens.

Die DE 10 2008 002 408 A1 offenbart ein Gehäuse einer Klimaanlage aus einer Art Fachwerkstruktur, die mit Bereichen einer reduzierten Wandstärke versehen ist.

Die WO 2006/091245 A2 offenbart die Herstellung von Komponenten eines Kraftfahrzeugs aus Polypropylen.

### Darstellung der Erfindung, Aufgabe, Lösung, Vorteile

Es ist die Aufgabe der Erfindung, ein Klimagerät zu schaffen, welches eine Komponente umfasst, die eine weitere Gewichtsreduzierung des Klimagerätes erlaubt.

Dies wird mit den Merkmalen von Anspruch 1 gelöst.

Ein Ausführungsbeispiel betrifft ein Klimagerät, insbesondere für ein Kraftfahrzeug, mit einer Komponente, die aus Polypropylen besteht. Bei einem erfindungsgemäßen Klimagerät ist die Komponente aus einem Halbzeug aus Polypropylen mit einer eigenverstärkten Struktur hergestellt. Das Polypropylen mit einer eigenverstärkten Struktur liegt als ein plattenförmiges Halbzeug vor und hat sowohl höhere mechanische Eigenschaften als auch eine geringere Dichte im Vergleich zu den üblichen Polypropylenen, welche in Klimaanlagen zum Einsatz kommen. Das Polypropylen mit der eigenverstärkten Struktur eignet sich für Konstruktionen und Fertigungsverfahren, bei welchen die Wirtschaftlichkeit der Fertigungsverfahren beachtet als auch auf einen hohen möglichen Freiheitsgrad der in einem Klimagerätgehäuse erforderlichen Geometrie geachtet werden muss.

Nicht Gegenstand der Erfindung ist ein Verfahren zur Herstellung einer Komponente eines Klimagerätes aus einem, aus Polypropylen bestehenden Halbzeug. Bei einem Verfahren, bei welchem eine geringe Materialdichte für die Komponente benötigt wird, wird das aus Polypropylen mit einer eigenverstärkten Struktur bestehende Halbzeug in einem Formpressverfahren zu der Komponente, vorzugsweise einem Gehäuse, umgeformt. Die geringe Materialdichte der Komponente führt zu einer Materialeinsparung, wobei die Komponente aber trotzdem hohe mechanische Eigenschaften aufweist.

Nicht Gegenstand der Erfindung ist ein Verfahren zur Herstellung einer Komponente eines Klimagerätes aus Polypropylen in einem Spritzgießverfahren. Erfindungsgemäß wird ein Halbzeug, welches aus einem Polypropylen mit einer eigenverstärkten Struktur besteht, in ein Spritzgießwerkzeug eingelegt, in welchem es mit einem für die Anwendung im Klimagerät geeigneten Polypropylen umspritzt wird. Infolge der hohen mechanischen Eigenschaften eignet sich die aus Polypropylen mit der eigenverstärkten Struktur bestehende Komponente zur lokalen Verstärkung in dem Klimagerät, wodurch neue konstruktive Möglichkeiten zugelassen werden. Bezüglich der Fertigung ist eine Integration hinsichtlich Formgebung und Fügung in dem bestehenden Spritzgießprozess umsetzbar. Dies hat neben einer wirtschaftlichen Fertigung den Vorteil, weiterhin den hohen fertigungstechnisch erreichbaren Freiheitsgrad von Spritzgießformteilen nutzen zu können.

In einer Variante wird beim Spritzgießverfahren ein bereits umgeformtes Halbzeug aus Polypropylen mit einer eigenverstärkten Struktur verwendet.

Alternativ wird ein noch nicht umgeformtes Halbzeug in das Spritzgießwerkzeug eingelegt, in diesem umgeformt und anschließend mit dem für das Klimagerät geeigneten Polypropylen umspritzt. Eigenverstärktes Polypropylen ist somit zur Herstellung einer formgepressten ganzheitlichen Komponente im Klimagerät als auch zur lokalen Verstärkung in einer spritzgegossenen Komponente geeignet.

Ein weiteres Ausführungsbeispiel sieht ein Verfahren zur Herstellung einer Komponente eines Klimageräts aus einem aus Propylen bestehenden Halbzeug vor, insbesondere auch gemäß eines vorhergehenden Verfahrens, wobei das eigenverstärkte Polypropylengewebe Verstärkungsfasern, wie insbesondere Glas- und/oder Kohlefasern, enthält.

Weitere vorteilhafte Ausgestaltungen sind durch die nachfolgende Figurenbeschreibung und durch die Unteransprüche beschrieben.

### Kurze Beschreibung der Erfindung

Ein Gehäuse eines Klimagerätes eines Kraftfahrzeuges ist aus einem Kunststoff hergestellt. Dieser Kunststoff besteht aus einem Polypropylen mit eigenverstärkter Struktur. Die Anwendung eines Materials aus Polypropylen bietet sich grundsätzlich an, da Polypropylen mit etwa 0,89 bis 0,91 g/cm³ als Thermoplast die geringste Dichte aufweist. Aufgrund der eigenverstärkten Struktur von Polypropylen ergeben sich verbesserte mechanische Eigenschaften im Vergleich zu gewöhnlichen Polypropylenen, wie aus Tabelle 1 hervorgeht.

**Tabelle 1**

| Kunststoff | Handelsname | Dichte (g/cm³) | Zugfestigkeit (N/mm²) | Zug-e-Modul (N/mm²) |
|---|---|---|---|---|
| PP-T20 | | 1,04-1,06 | 32-38 | 2200-2800 |
| PP-T40 | | 1,21-1,24 | 30-35 | 3500-4500 |
| PP-HC | | ca. 0,9 | ca. 32 | ca. 2000 |
| PP eigenverstärkt | curv | 0,92 | 120 | 4200 |

Wie aus Tabelle 1 ersichtlich, hat eigenverstärktes Polypropylen wesentlich bessere Materialeigenschaften als unverstärktes Polypropylen. Das eigenverstärkte Polypropylen weist einerseits eine geringe Dichte auf und hat andererseits deutlich höhere mechanische Eigenschaften, woraus sich neue Möglichkeiten zur Gewichtseinsparung im Klimagerät ergeben.

Das aus eigenverstärktem Polypropylen bestehende Gehäuse des Klimagerätes wird einfach in einem Formpressverfahren als ganzheitliche Komponente hergestellt. Es kann aber auch im Spritzgießverfahren integriert werden. Im Spritzgießverfahren lassen sich aber insbesondere Komponenten zur lokalen Verstärkung des Klimagerätes verwenden. Bezüglich der Fertigung ist eine Integration hinsichtlich Formgebung und Fügung der Komponenten in den bestehenden Spritzgießprozess umsetzbar. Dies hat neben einer wirtschaftlichen Fertigung den Vorteil, weiterhin den hohen fertigungstechnisch erreichbaren Freiheitsgrad von Spritzgießformteilen nutzen zu können.

## Patentansprüche

1. Klimagerät, insbesondere für ein Kraftfahrzeug, mit einer Komponente, welche aus Polypropylen besteht, **dadurch gekennzeichnet, dass** die Komponente aus einem Halbzeug bestehend aus Polypropylen mit einer eigenverstärkten Struktur hergestellt ist, wobei das aus Polypropylen mit einer eigenverstärkten Struktur bestehende Halbzeug in einem Formpressverfahren zu der Komponente, vorzugsweise einem Gehäuse, verformt wird, wobei die Komponente des Klimagerätes aus Polypropylen in einem Spritzgießverfahren hergestellt wird, wobei das Halbzeug, welches aus einem Polypropylen mit einer eigenverstärkten Struktur besteht, in ein Spritzgießwerkzeug eingelegt wird, in welchem es mit Polypropylen umspritzt wird, wobei die eigenverstärkte Struktur ein eigenverstärktes Polypropylengewebe ist.

2. Klimagerät nach Anspruch 1, **dadurch gekennzeichnet, dass** ein bereits umgeformtes Halbzeug verwendet wird.

3. Klimagerät nach einem der vorhergehenden Ansprüche, **dadurch gekennzeichnet, dass** das eigenverstärkte Polypropylengewebe Verstärkungsfasern, wie insbesondere Glas- und/oder Kohlefasern, enthält.

## Claims

1. An air-conditioner, in particular for a motor vehicle, with a component which consists of polypropylene, **characterised in that** the component is made of a semi-finished product consisting of polypropylene with a self-reinforced structure, wherein the semi-finished product consisting of polypropylene with a self-reinforced structure is formed into a component, preferably a housing, in a compression moulding method, wherein the air-conditioner component of polypropylene is made in an injection moulding method, wherein the semi-finished product consisting of a polypropylene with a self-reinforced structure is inserted into an injection moulding tool in which it is overmoulded with polypropylene, wherein the self-reinforced structure is a self-reinforced polypropylene fabric.

2. The air-conditioner according to claim 1, **characterised in that** an already formed semi-finished product is used.

3. The air-conditioner according to one of the preceding claims, **characterised in that** the self-reinforced polypropylene fabric contains reinforcement fibres, such as in particular glass and/or carbon fibres.

## Revendications

1. Climatiseur, en particulier pour un véhicule automobile, comprenant un composant qui est en polypropylène, **caractérisé en ce que** le composant est fabriqué à partir d'un produit semi-fini se composant de polypropylène ayant une structure intrinsèquement renforcée, où le produit semi-fini se composant de polypropylène ayant une structure intrinsèquement renforcée est déformé au cours d'un procédé de moulage par compression, pour former le composant, de préférence un boîtier, où le composant du climatiseur, qui est en polypropylène, est fabriqué au cours d'un procédé de moulage par injection, où le produit semi-fini, qui se compose d'un polypropylène ayant une structure intrinsèquement renforcée, est introduit dans un outil de moulage par injection, outil dans lequel ledit produit semi-fini est enrobé de polypropylène injecté, où la structure intrinsèquement renforcée est un tissu en polypropylène intrinsèquement renforcé.

2. Climatiseur selon la revendication 1, **caractérisé en ce qu'**un produit semi-fini déjà façonné est utilisé.

3. Climatiseur selon l'une des revendications précédentes, **caractérisé en ce que** le tissu en polypropylène intrinsèquement renforcé contient des fibres de renfort comme en particulier des fibres de verre et / ou de carbone.
